# EUROPÄISCHE PATENTSCHRIFT

(11) **EP 1 524 446 B1**
(45) Veröffentlichungstag und Bekanntmachung des Hinweises auf die Patenterteilung: **25.03.2009**
(21) Anmeldenummer: 04023120.1
(22) Anmeldetag: 29.09.2004
(51) Int. Cl.: F16D 25/10, F16D 21/06, F16D 25/12

(54) **Kupplungsaggregat**
Clutch device.
Dispositif d'embrayage.

(30) Priorität: 17.10.2003 DE 10348302
(43) Veröffentlichungstag der Anmeldung: 20.04.2005
(73) Patentinhaber: LuK Lamellen und Kupplungsbau Beteiligungs KG, 77815 Bühl (DE)
(72) Erfinder: Agner, Ivo, 77815 Bühl (DE)

(56) Entgegenhaltungen:
- DE-A- 10 155 458
- US-A- 2 712 373
- US-A- 3 753 478
- US-A- 4 798 272
- US-A- 5 749 451

## Beschreibung

Die Erfindung betrifft ein Kupplungsaggregat zur Drehmomentübertragung zwischen einem Motor und einem Getriebe. Insbesondere betrifft die Erfindung Kupplungsaggregate mit wenigstens zwei Reibungskupplungen, die jeweils mindestens eine Kupplungsscheibe besitzen, wobei jeder Kupplungsscheibe eine eigene anzutreibende Welle zugeordnet ist und die beiden Kupplungen unabhängig voneinander über jeweils einen Betätigungsmechanismus ein- und ausrückbar sind, wobei die Schließkraft der Kupplungen unmittelbar von den Betätigungsmechanismen aufgebracht wird. Derartige Kupplungsaggregate werden insbesondere in Verbindung mit so genannten Lastschaltgetrieben verwendet, die ein Schalten der Gänge ohne Zugkraftunterbrechung ermöglichen. Durch die US 2,712,373 ist ein Kupplungsaggregat der oben erwähnten Art bekannt geworden.

Der vorliegenden Erfindung lag die Aufgabe zugrunde, ein Kupplungsaggregat der eingangs genannten Art zu schaffen, die eine einwandfreie Funktion und einen einfachen Aufbau aufweisen sowie eine kostengünstige Herstellung gewährleisten. Weiterhin soll das erfindungsgemäße Kupplungsaggregat in besonders einfacher Weise betätigbar sein und die Verwendung von verhältnismäßig preisgünstigen Betätigungssystemen ermöglichen.

Gemäß der Erfindung wird dies bei einem Kupplungsaggregat der eingangs genannten Art dadurch erzielt, dass beide Kupplungen jeweils von einer ringförmig ausgebildeten Kolben-Zylindereinheit der Betätigungsmechanismen betätigbar sind und die Kolben-Zylindereinheiten koaxial und zumindest teilweise axial ineinander geschachtelt sind sowie zur Übertragung der Anpresskraft zwischen der jeweiligen Anpressplatte einer Kupplung und dem zugeordneten Betätigungsmechanismus ein topf- oder tellerförmiges, praktisch starres Zwischenelement vorgesehen ist. Unter Betätigungsmechanismus ist dabei ein System zu verstehen, dass eine von außen aufgebrachte Kraft in das Kupplungsaggregat einleitet um die dem Betätigungsmechanismus zugeordnete Reibungskupplung zu schließen und somit die zur Drehmomentübertragung erforderliche Anpresskraft auf die Anpressplatte der Reibungskupplung überträgt. Ein derartiger Mechanismus kann zum Beispiel durch ein elektromechanisches oder elektrohydraulisches oder ein pneumatisches System gebildet sein. Zweckmäßig können auch Kombinationen derartiger Systeme sein. Die Kolben-Zylindereinheiten können in bekannter Weise getriebeseitig montiert werden, bzw. sich zumindest getriebeseitig axial abstützen. Über die Kolben können dann die zum Betätigen der Reibungskupplungen notwendigen Kräfte in das Kupplungsaggregat eingeleitet werden. Besonders zweckmäßig kann es jedoch sein, wenn die Betätigungsmechanismen, wie zum Beispiel die Kolben-Zylindereinheiten, in das Kupplungsaggregat integriert sind. In vorteilhafter Weise kann die Integration derart erfolgen, dass die Kolben-Zylindereinheiten vom Gehäuse des Kupplungsaggregates getragen und axial abgestützt sind. Die beiden Kolben-Zylindereinheiten können hierfür eine eigene Baueinheit bilden, die über eine Lagerung gegenüber dem Gehäuse verdrehbar abgestützt ist. Zwischen dem entsprechenden Kolben und der Druckscheibe der zugeordneten Reibungskupplung, ist in vorteilhafter Weise ein Betätigungslager zwischengeschaltet, wodurch die beiden Kolben und das diese aufnehmende und die Zylinder bildende Gehäuse gegenüber den anderen Bauteilen des Kupplungsaggregates verdrehbar gelagert sind. Die Betätigungsmechanismen können somit drehfest bleiben, wodurch die Versorgung mit Druckmedium wesentlich vereinfacht wird.

Die Betätigungsmechanismen können derart im Kupplungsaggregat angeordnet, beziehungsweise abgestützt sein, dass die Kupplungsbetätigungskräfte beziehungsweise Kupplungsschließkräfte innerhalb des Kupplungsaggregates abgefangen werden; das bedeutet also, dass die das Kupplungsaggregat bildenden Bauteile die Betätigungsmechanismen derart abstützen, dass sich der durch diese Kräfte innerhalb dieser Bauteile erzeugte Kraftfluss schließt

Die Versorgung der vorerwähnten Kolben-Zylindereinheiten, kann mittels von externen, also an irgendeiner Stelle des Fahrzeuges angeordneten Geberzylinder erfolgen. Diese Geberzylinder können beispielsweise über Elektromotoren kraftbeaufschlagt werden. Zwischen dem entsprechenden Elektromotor und dem zugeordneten Geberzylinder kann eine mechanische Übersetzung vorgesehen werden.

Ein erfindungsgemäß ausgestaltetes Kupplungsaggregat ermöglicht einen besonders einfachen Aufbau, da durch eine einfache Nachführung des die Anpresskraft bzw. Schließkraft für die entsprechende Reibungskupplung aufbringenden Bauteils des Betätigungsmechanismus der an den Reibbelägen der zugeordneten Kupplungsscheibe auftretende Verschleiß kompensiert werden kann.

Es sind also innerhalb der einzelnen Reibungskupplungen bzw. des Kupplungsaggregates keine Nachstellsysteme notwendig, welche bei bekannten Reibungskupplungen zwischen dem eigentlichen Betätigungsmechanismus und der Kupplungsanpressplatte zwischengeschaltet sind.

Es kann jedoch vorteilhaft sein, wenn der Deckel eine hohe axiale Steifigkeit aufweist und die topfförmigen Bauteile eine definierte Elastizität besitzen.

Zweckmäßig kann es auch sein, wenn sowohl der Deckel als auch die Töpfe eine für die Funktion des Kupplungsaggregats zweckmäßige Elastizität bzw. Federeigenschaft besitzen

Obwohl es zweckmäßig sein kann, wenn die beiden Kupplungen bezüglich der radialen Erstreckung ihrer ringförmigen Reibflächen zumindest annähernd gleich groß sind, kann es für manche Anwendungsfälle besonders zweckmäßig sein, wenn die Reibflächen der beiden Reibungskupplungen unterschiedlich große ringförmige Bereiche aufweisen. Bei axial hintereinander angeordneten Reibungskupplungen, kann es vorteilhaft sein, wenn die dem Getriebe hingewandte Reibungskupplung die kleinere ringförmige Reibfläche besitzt.

In vorteilhafter Weise können die Anpressplatten der beiden Reibungskupplungen mittelbar oder unmittelbar mit dem Kupplungsgehäuse drehfest verbunden sein und zwar vorzugsweise mittels blattfederartiger Drehmomentübertragungszungen.

Zweckmäßig ist es, wenn auf die Anpressplatten der Kupplungen Kräfte einwirken, die ein Öffnen bzw. Lüften dieser Kupplungen bewirken. Derartige Kräfte können in besonders einfacher Weise durch die vorerwähnten blattfederartigen Zungen aufgebracht werden. Diese Zungen können mit entsprechender Vorspannung in das Kupplungsaggregat eingebaut werden, wobei je nach Größe der erforderlichen Lüftkräfte diese Zungen bezüglich ihrer Ausgestaltung und Anzahl angepasst werden können.

Um zu verhindern, dass mit zunehmenden Reibbelagverschleiß der jeweils einer Reibungskupplung zugeordnete Betätigungsmechanismus einen zu großen Betätigungsweg durchfahren muss, kann in zumindest ein entsprechend dem auftretenden Verschleiß mitwandemder Endanschlag vorgesehen werden, der den Öffnungsweg der Anpressplatte bzw. den Rückstellweg des entsprechenden Betätigungsmechanismus auf das notwendige Maß begrenzt. Derartige Wegbegrenzer, wie zum Beispiel Endanschläge, können beispielsweise im Bereich der einen Zentralausrückmechanismus bildenden Betätigungsmechanismen vorgesehen werden. Derartige Abhubbegrenzungsmittel bzw. Rückstellbegrenzungsmittel können beispielsweise zwischen dem Kolben einer Kolben-Zylindereinheit und einem axial festen Bauteil wie zum Beispiel zugeordneter Zylinder oder aber Kupplungsgehäuse vorgesehen werden.

Die vorerwähnten mitwandernden Endanschläge bzw. Ausrückwegbegrenzer, welche den Betätigungsweg der zugeordneten Reibungskupplung auf das erforderliche Maß begrenzen, können sowohl bei hydraulischen Aktorlösungen, als auch für elektromechanische Aktoren Verwendung finden.

Vorteilhaft kann es sein, wenn die den Betätigungshub einer Reibungskupplung auf das notwendige Maß begrenzenden Mittel, wie zum Beispiel die vorerwähnten, mitwandemden Endanschläge, vor dem die Einrückkräfte in die Kupplung einleitenden Lager, wie insbesondere Wälzlager, vorgesehen werden. Durch eine derartige Anordnung können die zwischen der entsprechenden Anpressplatte und dem Kupplungsgehäuse angeordneten blattfederartigen Zungen eine entsprechend große Kraft bzw. Vorlast auf das vorerwähnte Lager ausüben.

Kupplungsaggregate, die entsprechend der beschriebenen Erfindung modifiziert werden können, sind beispielsweise durch die DE 101 55 458 A1 oder EP 1 271 007 A2 vorgeschlagen worden.
- Figur 1: eine schematische Darstellung eines Kraftfahrzeuges mit Antriebsmotor, Kupplungsaggregat, Getriebe, nachgeschaltetem Antriebsstrang sowie Regel- beziehungsweise Steuereinrichtung,
- Figur 2: ein für den Einbau zwischen Motor und Getriebe ausgebildetes Kupplungsaggregat und
- Figur 3: eine weitere Ausführungsform eines Kupplungsaggregates
- Figur 4: eine Variante eines Ausrückmechanism us

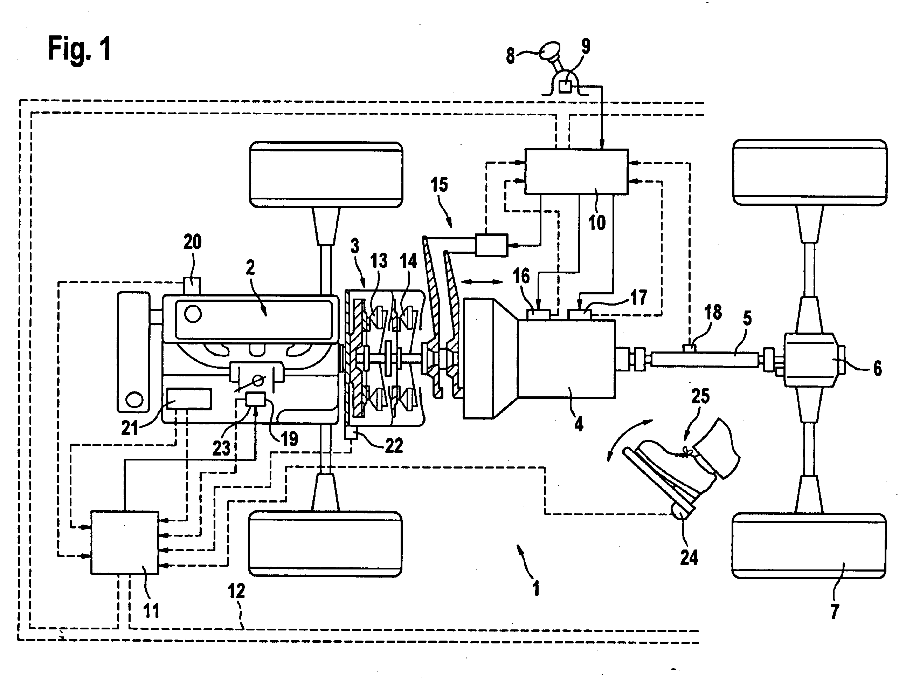

Figur 1 zeigt schematisch ein Kraftfahrzeug 1 mit einem Antriebsstrang, der einen als Verbrennungsmotor ausgebildeten Antriebsmotor 2, ein Kupplungsaggregat 3 und ein Getriebe 4 enthält. Über eine Antriebswelle 5 und ein Differential 6 werden die Räder 7 des Fahrzeuges 1 angetrieben. Sinngemäß kann es sich selbstverständlich auch um ein Fahrzeug mit einer oder mehreren anderen angetriebenen Achsen handeln.

Es ist eine Übersetzungswähleinrichtung 8, wie Wählhebel mit Sensor 9 und eine Steuereinrichtung 10,11 als Blockschaltbild gezeigt. Die Steuereinrichtung 10,11 kann als Einheit oder in baulich und/oder funktionell getrennten Teilbereichen ausgebildet sein. Falls die Steuereinrichtung 10,11 in baulich und/oder funktionell getrennten Teilbereichen ausgebildet ist, können diese beispielsweise über einen CAN-Bus 12 oder eine andere elektrische Verbindung zum Datenaustausch miteinander verbunden sein. Die Steuereinrichtung 10,11 steuert beispielsweise die automatisierte Betätigung des Getriebes 4 und/oder die zum Kupplungsaggregat 3 gehörenden Kupplungen 13, 14 oder den Motor 2, beispielsweise das Motormoment, die Wahl der Getriebeübersetzung, einer Parkstellung oder einer Neutralstellung des Getriebes 4 oder das von den Kupplungen 13, 14 übertragbare Drehmoment.

Die Kupplungen 13, 14 sind mittels einer Aktorik 15 vorzugsweise automatisiert betätigbar, wobei die Kupplungen 13, 14 voneinander unabhängig betätigt werden können. Die Aktorik 15 zur Kupplungsbetätigung der Kupplungen 13, 14 kann in einer baulichen und/oder funktionellen Baueinheit oder in beispielsweise den einzelnen Kupplungen 13, 14 zugeordneten Teilbereichen ausgeführt werden.

Die Einrichtung zum Ändern des Übersetzungsverhältnisses des Getriebes umfaßt zumindest Getriebebetätigungseinrichtungen 16, 17, wobei jede der Getriebebetätigungseinrichtungen 16, 17 zur Betätigung einer Gruppe von Übersetzungsstufen vorgesehen sein können, die jeweils einer der Kupplungen 13, 14 zugeordnet sind. Insbesondere können die Gruppen der Übersetzungsstufen derart gebildet sein, dass die Übersetzungsstufen bezüglich ihrer Übersetzung eine Reihenfolge bilden, so dass benachbarte Übersetzungsstufen jeweils unterschiedlichen Kupplungen 13, 14 zugeordnet werden können. Das Kupplungsaggregat 3 ermöglicht somit eine für einen Lastschaltbetrieb notwendige Betätigung der Kupplungen 13, 14 in übergehendem Wechsel zur zugkraftunterbrechungsarmen oder zugkraftunterbrechungsfreien Schaltung.

Die Übersetzung des Getriebes 4 ist durch eine Ansteuerung der Betätigungseinrichtungen 16, 17 veränderbar. Die Betätigungseinrichtungen 16, 17 können beispielsweise je zwei Antriebe zur Erzeugung einer Schalt- bzw. Wählbewegung umfassen.

Auch das Kupplungsaggregat 3 ist durch die Steuereinrichtung 10 mittels der Aktorik 15 automatisiert betätigbar.

Die Steuereinrichtung 44 empfängt Signale, die den Übertragungszustand der Kupplungen 13 und/oder 14 und die im Getriebe 4 eingestellten Übersetzungsverhältnisse wenigstens repräsentieren, sowie, falls erforderlich, Signale von einem Sensor 18 für die Abtriebsdrehzahl und einem Sensor 9 an der Übersetzungswähleinrichtung 8. Diese Signale werden von Sensoren ermittelt, wie von einem Gangerkennungssensor oder von einem Kupplungswegsensor.

Bereich 11 der Steuereinrichtung steuert den Verbrennungsmotor 2 über eine Verstellung der Drosselklappe und/oder der Einspritzung 19. Es werden Signale von Sensoren 20 für Saugrohrdruck 21, für Kühlwassertemperatur 22, für die Motordrehzahl 23, für die Stellung der Drosselklappe beziehungsweise Einspritzung 19 und 24 für eine Gaspedalbetätigung 25 empfangen. Sinngemäß kann die Erfindung selbstverständlich mit allen Arten von Antriebsmotoren verwendet werden.

Die Getriebebetätigungseinrichtungen 16, 17 umfassen beispielsweise je zwei Elektromotoren, wobei ein erster Elektromotor zur Betätigung des Wahlvorganges angesteuert wird und ein zweiter Elektromotor zur Betätigung des Schaltvorganges angesteuert wird. Hierzu wird mittels der Elektromotoren entlang der Wählstrecke bzw. der Schaltstrecke eine Verstelleinrichtung zumindest eines getriebeseitigen Schaltelementes betätigt.

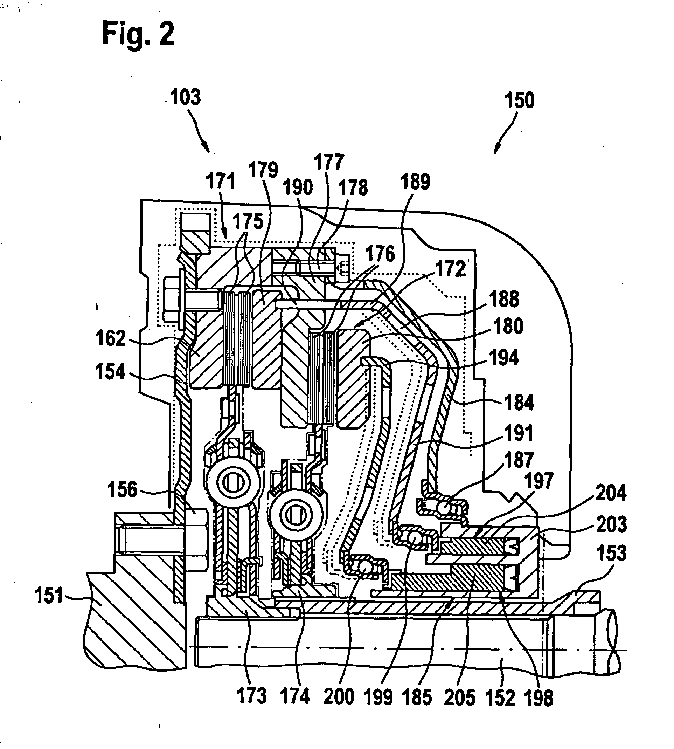

Das in der Figur 2 dargestellte Kupplungsaggregat 103, welches zum Beispiel bei einem Kraftfahrzeug gemäß Figur 1 verwendet werden kann, umfasst eine Kupplungseinheit mit einer Doppelkupplung 150, die eine treibende Welle, wie insbesondere die Kurbelwelle 151 einer Brennkraftmaschine mit zwei antreibbaren Wellen, wie insbesondere Getriebeeingangswellen 152, 153 verbinden und von diesen trennen kann. Die Doppelkupplung 150 ist hier über eine Antriebsplatte 154 mit dem Motor verbunden. Die von der Kurbelwelle 151 her in die Antriebsplatte 154 eingeleiteten Torsionsschwingungen werden auf die Doppelkupplung 150 beziehungsweise auf die Getriebewellen 152, 153 übertragen.

Anstatt der Antriebsplatte 154 oder zusätzlich zur Antriebsplatte 154 könnte auch ein Dämpfer zwischen der Doppelkupplung 150 und der Welle 151 vorgesehen werden. Ein derartiger Dämpfer kann nach Art eines so genannten Zweimassenschwungrades ausgebildet sein. Eine derartige Ausgestaltung ist beispielsweise durch die DE 100 13 576 A bekannt geworden. Bei dieser bekannten Anordnung ist die Doppelkupplung mit dem Ausgangsteil eines Torsionsschwingungsdämpfers drehfest verbunden, dessen Eingangsteil mit der Abtriebswelle eines Motors gekoppelt ist.

Bezüglich des prinzipiellen Aufbaus und der Funktion eines derartigen Dämpfers wird auch auf die DE 197 28 422 A, die DE 195 22 718 A, die DE 41 22 333 A, die DE 41 17 582 A und die DE 41 17 579 A verwiesen.

Die Antriebsplatte ist über radial innere Bereiche mit der Kurbelwelle 151 - hier mittels Schrauben 156 - fest verbunden. Die Antriebsplatte 154 ist hier durch ein Blechformteil gebildet, welches radial außen die Doppelkupplung 150 trägt.

Die Kupplungseinheit beziehungsweise Doppelkupplung 150 besitzt zwei Reibungskupplungen 171, 172, die jeweils eine Kupplungsscheibe 173, 174, die hier mit Schwingungsdämpfer ausgebildet sind, umfassen. Die Kupplungsscheibe 173 ist auf der inneren Welle 152 und die Kupplungsscheibe 174 auf der hohlen äußeren, koaxial verlaufenden Welle 153 aufgenommen. Radial außen besitzen die Kupplungsscheiben 173, 174 Reibbereiche, welche bei dem dargestellten Ausführungsbeispiel durch ringförmige Reibbeläge 175, 176 gebildet sind. Das die Gegendruckplatte 162 für die Reibungskupplung 171 bildende ringförmige Bauteil 162 trägt ein weiteres ringförmiges Bauteil 177, welches die Gegendruckplatte für die Reibungskupplung 172 bildet. Die Gegendruckplatten 162 und 177 sind über radial äußere Bereiche über Befestigungsmittel, welche bei dem dargestellten Ausführungsbeispiel durch Schrauben 178 gebildet sind, fest miteinander verbunden. Beide Reibungskupplungen 171, 172 besitzen eine Anpreßplatte 179, 180, die axial verlagerbar, jedoch drehfest gegenüber den Gegendruckplatten 162, 177 sind. Hierfür können die Anpressplatten 179, 180 in bekannter Weise über Blattfederelemente entweder unmittelbar oder mittelbar drehfest mit den Gegendruckplatten 162 und 177 drehfest verbunden sein.

Wie aus Figur 2 ersichtlich ist, ist die Anpressplatte 179 axial zwischen den beiden Gegendruckplatten 162 und 177 aufgenommen.

Die Gegendruckplatten 162 und 177 sind mit einem Kupplungsgehäuse 184, das hier aus Blech besteht, fest verbunden. Das Kupplungsgehäuse 184 dient gleichzeitig zur Zentrierung eines Betätigungsmechanismus 185, über welchen die beiden Reibungskupplungen 171, 172 selektiv betätigbar sind. Der Betätigungsmechanismus 185 ist am Kupplungsgehäuse 184 zentriert. Diese Zentrierung erfolgt hier mittels eines Lagers 187, welches den Betätigungsmechanismus 185 gegenüber dem Kupplungsaggregat 103 zentriert beziehungsweise abstützt.

Die Betätigung der Reibungskupplung 171 beziehungsweise die axiale Verlagerung der Anpressplatte 179 erfolgt über ein Betätigungsmittel 188, welches hier als topfartiges Element 188 ausgestaltet ist. Das Element 188 besitzt einen im Wesentlichen ringförmigen Bereich 189, mit axial gerichteten Zungen 190, über die sich das als Zwischenbauteil wirksame Element 188 an der Anpressplatte 179 abstützt. Die als Abstandshalter dienenden Zungen 190, erstrecken sich axial durch Öffnungen der Gegendruckplatte 177. Diese Öffnungen können beispielsweise schlitzartig ausgebildet sein. Das Element 188 besitzt weiterhin radiale Bereiche 191, welche unmittelbar von einer Betätigungseinheit 197 beaufschlagbar sind. Die radialen Bereiche 191 besitzen eine Mehrzahl von in Umfangsrichtung verteilten Öffnungen, die eine Luftzirkulation zur Kühlung ermöglichen. In vorteilhafter Weise können die Randbereiche der entsprechenden Öffnungen derart ausgebildet sein, dass sie als Gebläseschaufel wirken.

Die Reibungskupplung 172 ist ebenfalls über ein Betätigungsmittel 194 betätigbar, welches bei dem dargestellten Ausführungsbeispiel ebenfalls durch ein topfartiges Element 194 gebildet ist. Das Element 194 ist bezüglich der Ausgestaltung und der Funktion vergleichbar mit dem Element 188. Das Element 194 stützt sich radial außen an der Anpressplatte 180 ab und wird radial innen von einer Betätigungseinheit 198 beaufschlagt.

Bei dem dargestellten Ausführungsbeispiel sind beide Reibungskupplungen 171, 172 derart ausgestaltet, dass sie über die Betätigungseinheiten 197, 198 zwangsweise geschlossen werden. Die für das Schließen der Reibungskupplungen 171, 172 erforderlichen Axialkräfte werden somit über den Betätigungsmechanismus 185 aufgebracht. Dieser Betätigungsmechanismus 185 umfasst zumindest die zwei Betätigungseinheiten 197, 198, die bei dem dargestellten Ausführungsbeispiel koaxial angeordnet und zumindest teilweise axial ineinander geschachtelt sein können. Die Betätigungseinheiten 197, 198 umfassen ein axial verlagerbares Ausrücklager 199, 200. Die Ausrücklager 199, 200 besitzen einen verdrehbaren Ring, der auf die jeweils zugeordneten Elemente 188 und 194 axial einwirken, um die für das zu übertragende Drehmoment erforderlichen Anpresskräfte auf die Anpressplatte 179, 180 einzuleiten.

Vorteilhaft kann es sein, wenn die üblicherweise zwischen den Anpressplatten 179, 180 und dem Gehäuse 184 wirksamen Blattfederelemente derart vorgespannt sind, dass die dadurch erzeugten Abhubkräfte, welche auf die Anpressplatten 179, 180 wirken, ausreichen, um die Elemente 188, 194 gegen die Betätigungseinheiten 197, 198 zu drängen beziehungsweise zu verspannen.

Zweckmäßig kann es sein, wenn zumindest eine der Betätigungseinheiten 197, 198 derart ausgebildet ist, dass sie auf wenigstens das Betätigungselement 188 und/oder 194 in beide axiale Richtungen eine Kraft ausüben kann. Dadurch können die entsprechende Betätigungseinheit oder gar beide Betätigungseinheiten 197, 198 sowohl eine Ausrückkraft als auch eine zusätzliche Anpresskraft zum Schließen der entsprechenden Reibungskupplung auf die Betätigungselement 188 und/oder 194 übertragen.

Der Betätigungsmechanismus 185 kann zwei ineinander geschachtelte Kolben-Zylindereinheiten aufweisen, die vorzugsweise hydraulisch und/oder auch pneumatisch beaufschlagbar sein können. Die beiden Zylinder können dabei ein gemeinsames Gehäuse- bzw. Trägerteil 203 besitzen. In vorteilhafter Weise kann der Betätigungsmechanismus jedoch auch derart ausgebildet sein, dass wenigstens eine der Betätigungseinheiten 197, 198 als elektromechanischer Betätiger ausgebildet ist. Bezüglich der Ausgestaltung und Funktionsweise eines solchen elektromechanischen Betätigers wird insbesondere auf die deutsche Patentanmeldung 100 33 649 beziehungsweise auf die parallele französische Patentanmeldung 0008975 verwiesen. Das in diesen Anmeldungen offenbarte Prinzip der Umwandlung einer Rotationsbewegung in eine Axialbewegung mittels eines axial aufgewickelten Bandes kann in vorteilhafter Weise bei der Betätigungseinheit 197 und/oder 198 Anwendung finden.

Wie aus Figur 2 zu entnehmen ist, besitzt der Betätigungsmechanismus 185 ein Gehäuse- bzw. Trägerteil 203, welches bei dem dargestellten Ausführungsbeispiel zumindest zur teilweisen Bildung von Zylinderräumen dient, zur Aufnahme der die Ausrücklager 199, 200 tragenden Kolben 204, 205.

Das Lager 187, welches bei dem dargestellten Ausführungsbeispiel durch ein Wälzlager in Form eines Kugellagers gebildet ist, ist zwischen dem äußeren Kupplungsgehäuse 184 und dem Gehäuse- bzw. Trägerteil 203 des Betätigungsmechanismus 185 derart angeordnet, dass die von den Betätigungseinheiten 197, 198 auf die Betätigungselement 188, 194 ausgeübten Kräfte von diesem Lager 187 derart abgefangen werden, dass sich innerhalb der Kupplungseinheit 150 ein geschlossener Kraftfluss bildet. Dadurch wird vermieden, dass die Kupplungsbetätigungskräfte von der Kurbelwellenlagerung abgefangen werden müssen.

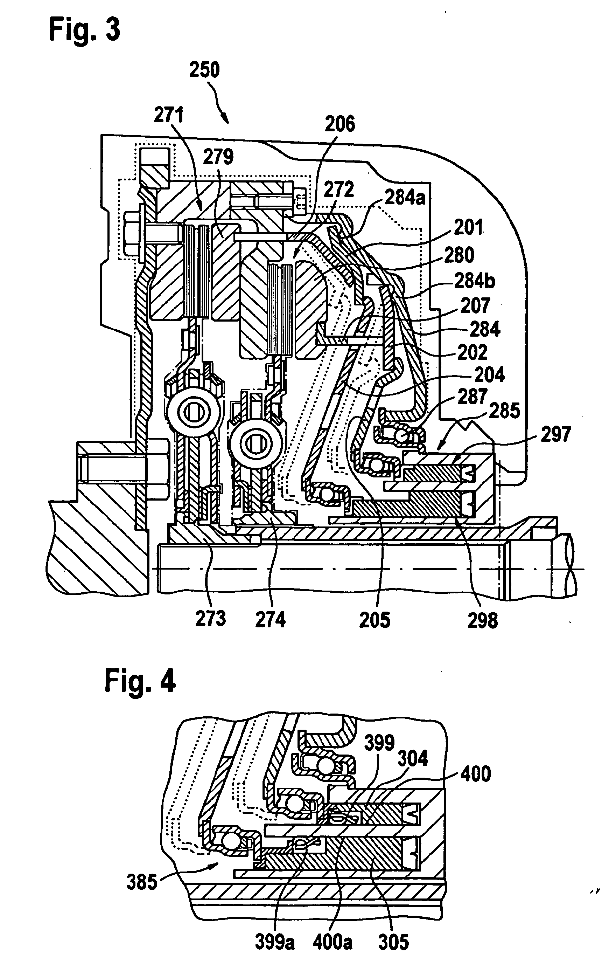

Das in Figur 3 dargestellte Kupplungsaggregat 250 hat einen ähnlichen Aufbau wie das gemäß Figur 2. Im Folgenden werden daher lediglich die wesentlichen baulichen und funktionellen Unterschiede beschrieben.

Aus Figur 3 ist ersichtlich, dass das Kupplungsaggregat 203 ebenfalls zwei Reibungskupplungen 271, 272 aufweist, denen jeweils eine Kupplungsscheibe 273, 274 zugeordnet ist. Auch ist ein Ausrückmechanismus 285 mit zwei als Kolben-Zylindereinheiten ausgebildeten Betätigungseinheiten 297, 298 für die beiden Reibungskupplungen 271, 272 vorhanden. Der Ausrückmechanismus 285 ist gegenüber dem Kupplungsgehäuse 284 über eine Lagerung 287 zentriert und axial abgestützt.

Die Ausgestaltung gemäß Figur 3 unterscheidet sich gegenüber derjenigen gemäß Figur 2 insbesondere dadurch, dass die Anpressplatten 279, 280 unter Zwischenschaltung von Hebelelementen 201, 202 beaufschlagt werden.

Die Hebelelemente 201, 202 sind gegenüber dem Gehäuse 284 zentriert gehalten und können in vorteilhafter Weise als ringartige Bauteile ausgebildet sein. Derartige ringartig ausgebildete Hebelelemente 201, 202 können in vorteilhafter Weise eine Federwirkung aufweisen und beispielsweise als membranartige bzw. tellerfederartige Bauteile ausgebildet sein. In vorteilhafter Weise sind derartige in ihrer Konizität elastisch verformbare Hebelelemente derart ausgebildet, dass sie die Tendenz haben, in Öffnungsrichtung der Reibungskupplungen 271, 272 sich selbsttätig aufzustellen, also die Anpressplatten 279, 280 zu entlasten. Die Hebelelemente 201, 202 stützen sich bei dem dargestellten Ausführungsbeispiel mit einem radial außen liegenden ringförmigen Bereich an Abstützbereiche 284a, 284b des Gehäuses 284 ab. Die Abstützbereiche 284a, 284b sind hier durch wulstartige Anprägungen gebildet. Radial innen werden die hebelartigen Elemente 201, 202 von der ihnen jeweils zugeordneten Betätigungseinheit 297 bzw. 298 beaufschlagt und zwar unter Zwischenschaltung eines scheiben- bzw. tellerförmigen Zwischenelementes 204, 205. Über einen Zwischenbereich können die Hebelelemente 201, 202 unter Zwischenschaltung von Abstandselementen 206, 207 die ihnen zugeordnete Anpressplatte 279, 280 in Schließrichtung beaufschlagen. In vorteilhafter Weise können die Hebelelemente 201, 202 derart ausgebildet und an den einzelnen Bauteilen 284, 204, 205, 206, 207 abgestützt sein, dass sie eine Hebelübersetzung größer als 1 bis ca. 2 zu 1 bezüglich der jeweils auf die Anpressplatten 279, 280 ausgeübten Axialkraft im Verhältnis zu der von den Betätigungseinheiten 297, 298 jeweils aufgebrachten Axialkraft bewirken.

In Figur 4 ist ein hydraulischer Ausrückmechanismus 385 dargestellt, der bei den Ausführungsformen gemäß den vorbeschriebenen Figuren Verwendung finden kann und einen ähnlichen Aufbau wie die Ausrückmechanismen welche in Verbindung mit diesen Figuren beschrieben wurden, aufweist.

Der wesentliche Unterschied des Ausrückmechanismus 385 gegenüber den vorbeschriebenen besteht darin, dass bei diesem Mittel 399 und 399a vorgesehen sind, welche den Weg in Ausrückrichtung der beiden Kolben 304, 305 gegenüber den die Zylinderräumen bildenden Bauteilen begrenzen. Bei dem dargestellten Ausführungsbeispiel sind diese Mittel durch Klemmelemente, die beispielsweise ringförmig ausgebildet sein können, gebildet. Diese Klemmelemente sind auf Zylinderwandungen axial verschiebbar aufgenommen. Hierfür können die Elemente 399, 399a z. B. radial federnde Bereiche aufweisen, die einen definierten axialen Verschiebewiderstand für die Elemente 399, 399a erzeugen. Beim Einrücken der entsprechenden Reibungskupplungen und vorhandenem Belagverschleiß werden diese Elemente 399, 339a entsprechend einem Weg axial verschoben, der abhängig ist vom aufgetretenen Belagverschleiß, wodurch beim Ausrücken bzw. Öffnen der entsprechenden Reibungskupplungen die Kdben 304, 305 stets einen praktisch gleichen Weg zurücklegen. Der Weg um den die Elemente 399, 399a axial verlagert werden, ist bei einer Ausführungsform gemäß Figur 2, sofem man die Elastizität einzelner Bauteile unberücksichtigt lässt, praktisch identisch mit dem aufgetretenen Belagverschleiß. Bei einer Ausführungsform gemäß Figur 3, wird dieser Weg entsprechend der vorhandenen Hebelübersetzungen gegenüber dem tatsächlich aufgetretenen Verschleiß an den Reibbelägen verändert bzw. vergrößert. Die Elemente 399, 399a wandern also in Abhängigkeit eines auftretenden Belagverschleißes axial mit den Kolben 304, 305 mit.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

### Bezugszeichenliste

- 1.: Kraftfahrzeug
- 2: Antriebsmotor
- 3: Kupplungsaggregat
- 4: Getriebe
- 5: Antriebswelle
- 6: Differantial
- 7: Rad
- 8: Übersetzungswähleinrichtung
- 9: Sensor
- 10, 11: Steuereinrichtung
- 12: CAN-Bus
- 13, 14: Kupplung
- 15: Aktorik
- 16, 17: Getriebebetätigungseinrichtung
- 18: Sensor
- 19: Einspritzung
- 20: Sensor
- 21: Saugrohrdruck
- 22: Kühlwassertemperatur
- 23: Motordrehzahl
- 24: Einspritzung
- 25: Gaspedalbetätigung
- 44: Steuereinrichtung
- 103: Kupplungsaggregat
- 150: Doppelkupplung
- 151: Kurbelwelle
- 152, 153: Getriebeeingangswelle
- 154: Antriebsplatte
- 156: Schraube
- 162: Gegendruckplatte
- 171, 172: Reibungskupplung
- 173, 174: Kupplungsscheibe
- 175, 176: Reibbeläge
- 177: Bauteil
- 178: Schraube
- 179, 180: Anpressplatte
- 184: Kupplungsgehäuse
- 185: Betätigungsmechanismus
- 187: Lager
- 188: Betätigungsmittel
- 189: Bereich
- 190: Zunge
- 191: Bereich
- 194: Betätigungsmittel
- 197, 198: Betätigungseinheit
- 199, 200: Ausrücklager
- 201, 202: Hebelelement
- 203: Gehäuse- bzw.Trägerteil
- 204, 205: Kolben
- 206, 207: Abstandselement
- 250: Kupplungsaggregat
- 271, 272: Reibungskupplung
- 273,274: Kupplungsscheibe
- 279, 280: Anpressplatte
- 284: Kupplungsgehäuse
- 284a, 284b: Abstützbereiche
- 285: Ausrückmechanismus
- 287: Lagerung
- 297, 298: Betätigungseinheit
- 304, 305: Kolben
- 385: Ausrückmechanismus
- 399, 399a: Element

## Patentansprüche

1. Kupplungsaggregat (103) mit wenigstens zwei Reibungskupplungen (171, 172), die jeweils mindestens eine Kupplungsscheibe (173, 174) aufweisen, wobei die beiden Kupplungsscheiben mit einer eigenen anzutreibenden Welle (152, 153) verbindbar sind und die beiden Kupplungen unabhängig voneinander über jeweils einen Betätigungsmechanismus (197, 198) ein- und ausrückbar sind, wobei die Schließkraft der Kupplungen (71,172) unmittelbar von den Betätigungsmechanismen (197,198) aufgebracht wird, **gekennzeichnet durch** die Kombination folgender Merkmale,
- beide Kupplungen (171, 172) sind jeweils von einer ringförmig ausgebildeten Kolben-Zylindereinheit der Betätigungsmechanismen betätigbar,
- die Kolben-Zylindereinheiten sind koaxial und zumindest teilweise axial ineinander geschachtelt,
- zur Übertragung der Anpresskraft zwischen der jeweiligen Anpressplatte (179,180) einer Kupplung und dem zugeordneten Betätigungsmechanismus (197,198) ist ein topf- oder tellerförmiges, praktisch starres Zwischenelement (188,194) vorgesehen.

2. Kupplungsaggregat nach Anspruch 1, **dadurch gekennzeichnet, dass** die Kupplungen (171, 172) keine Selbstnachstellung für den Belagverschleiß der zugeordneten Kupplungsscheibe aufweisen.

3. Kupplungsaggregat nach einem der Ansprüche 1 und 2, **dadurch gekennzeichnet, dass** zur Begrenzung des Ausrückweges wenigstens einer der Kupplungen ein Begrenzungsanschlag vorhanden ist, der entsprechend dem auftretenden Verschleiß nachgeführt wird.

## Claims

1. Clutch device (103) having at least two friction clutches (171, 172) which have in each case at least one clutch disc (173, 174), with it being possible for the two clutch discs to be connected to a separate shaft (152, 153) to be driven and with it being possible for the two clutches to be engaged and disengaged independently of one another by means of in each case one actuating mechanism (197, 198), with the closing force of the clutches (171, 172) being imparted directly by the actuating mechanisms (197, 198), **characterized by** the combination of the following features,
- the two clutches (171, 172) can be actuated in each case by an annular piston-cylinder unit of the actuating mechanisms,
- the piston-cylinder units are coaxial and at least partially nested axially one inside the other,
- to transmit the pressure force between the respective pressure plate (179, 180) of a clutch and the associated actuating mechanism (197, 198), a pot-shaped or plate-shaped, practically rigid intermediate element (188, 194) is provided.

2. Clutch device according to Claim 1, **characterized in that** the clutches (171, 172) do not have self-adjustment for the lining wear of the associated clutch disc.

3. Clutch device according to one of Claims 1 and 2, **characterized in that**, to limit the disengagement travel of at least one of the clutches, a limiting stop is provided which is re-adjusted corresponding to the occurring wear.

## Revendications

1. Dispositif d'embrayage (103) comprenant au moins deux embrayages à friction (171, 172), qui présentent chacun au moins un disque d'embrayage (173, 174), les deux disques d'embrayage pouvant être connectés à un arbre propre à entraîner (152, 153), et les deux embrayages pouvant être embrayés et débrayés indépendamment l'un de l'autre par le biais d'un mécanisme d'actionnement respectif (197, 198), la force de fermeture des embrayages (171, 172) étant appliquée directement par les mécanismes d'embrayage (197, 198), **caractérisé par** la combinaison des caractéristiques suivantes :
- les deux embrayages (171, 172) peuvent chacun être actionné par une unité cylindre-piston de forme annulaire des mécanismes d'embrayage,
- les unités cylindre-piston sont montées coaxialement et sont au moins partiellement emboîtées l'une dans l'autre axialement,
- pour le transfert de la force d'application entre chaque plateau de pression (179, 180) d'un embrayage et le mécanisme d'actionnement associé (197, 198), on prévoit un élément intermédiaire (188, 194) en forme de pot ou de disque, pratiquement rigide.

2. Dispositif d'embrayage selon la revendication 1, **caractérisé en ce que** les embrayages (171, 172) ne présentent aucun rajustement automatique pour l'usure des garnitures du disque d'embrayage associé.

3. Dispositif d'embrayage selon l'une quelconque des revendications 1 ou 2, **caractérisé en ce que** pour limiter la course de débrayage d'au moins l'un des embrayages, on utilise une butée de fin de course qui est rapprochée en fonction de l'usure existante.
